# EUROPÄISCHE PATENTANMELDUNG

(11) **EP 2 106 985 A2**
(43) Veröffentlichungstag der Anmeldung: **07.10.2009**
(21) Anmeldenummer: 09154622.6
(22) Anmeldetag: 09.03.2009
(51) Int. Cl.: B61L 1/14, B61L 1/16

(54) **Verfahren und Vorrichtung zur Detektion des Belegt- oder Freizustandes eines Gleisabschnittes**

(30) Priorität: 31.03.2008 DE 102008016962
(71) Anmelder: Siemens Aktiengesellschaft, 80333 München (DE)
(72) Erfinder: Flemming, Detlev, 38110 Braunschweig (DE); Rosenkranz, Uwe, 38104 Braunschweig (DE)

(57) **Zusammenfassung**

Die Erfindung betrifft ein Verfahren und eine Vorrichtung zur Detektion des Belegt- oder Freizustandes eines Gleisabschnittes, insbesondere bei gummibereiften Fahrzeugen (1), wobei vorgesehen ist, dass fahrzeugseitig erzeugte Signale streckenseitig am Anfang (3) und am Ende (4) des Gleisabschnittes empfangen und ausgewertet werden.

## Beschreibung

Die Erfindung betrifft ein Verfahren und eine Vorrichtung zur Detektion des Belegt- oder Freizustandes eines Gleisabschnittes, insbesondere bei gummibereiften Fahrzeugen.

Die Gleisfreimeldung stellt ein wesentliches Entscheidungskriterium für die Steuerung von Weichen und Signalen dar. Anhand des Belegungszustandes der Gleisabschnitte wird die Entscheidung getroffen, ob ein Schienenfahrzeug in diesen Gleisabschnitt einfahren darf oder nicht. Ziel ist prinzipiell die Verhinderung von Kollisionen der Fahrzeuge durch Auffahren oder Flankenfahrt. Dazu muss sichergestellt werden, dass sich jeweils nur ein Fahrzeug in einem definierten Abschnitt der Strecke befindet. Anderen Fahrzeugen ist die Einfahrt in diesen durch ein Fahrzeug besetzten Gleisabschnitt zu verwehren. Dies ist die klassische Aufgabe für ein Stellwerk. Das Stellwerk benötigt dazu eine sicherungstechnische Information, welche Gleisabschnitte besetzt und welche frei sind.

Zur Feststellung der Präsenz eines Schienenfahrzeuges in einem Gleisabschnitt befinden sich derzeit zwei grundlegend verschiedene Konzepte im praktischen Einsatz.

Beim Achszähler werden jeweils am Anfang und am Ende eines Gleisabschnittes die Achsen des durchfahrenden Schienenfahrzeuges oder Zugverbandes gezählt. Stimmt die ermittelte Anzahl überein, ist der Gleisabschnitt wieder frei. Dabei wird die Magnetfeld beeinflussende Wirkung der Eisenräder der Schienenfahrzeuge ausgenutzt. Mittels am Gleiskörper angebrachter induktiver Sensoren, die ein spezifisches Magnetfeld erzeugen, lässt sich die Rückwirkung der Eisenräder erfassen, wobei mit jeder Raderfassung bzw. Achsenerfassung ein Radimpuls gezählt wird.

Ein Alternativkonzept bietet der Gleisstromkreis, welcher die Zugpräsenz anhand einer permanenten Messung ermittelt. Der zwischen dem Anfang und dem Ende des zu überwachenden Gleisabschnittes gebildete Gleisstromkreis wird dabei bei Präsenz eines Schienenfahrzeuges durch dessen metallische Achsen kurzgeschlossen.

Beide Konzepte setzen das Vorhandensein größerer Metallmassen im Unterbau des Fahrzeuges voraus. Insbesondere bei gummibereiften Fahrzeugen sind diese Verfahren nicht anwendbar.

Bekannt bei Fahrzeugen mit Gummibereifung, beispielsweise Einschienenbahnen oder mechanisch geführten, automatisch betriebenen Zweischienenbahnen, sind Gleisfreimeldesysteme mit in der Strecke verlegten, segmentierten Linienleitern, über deren kontinuierliche Kommunikation mit dem Fahrzeug die Besetzung der Gleisabschnitte verfolgt werden kann. Nachteilig ist hier vor allem der ganz erhebliche streckenseitige Aufwand, da eine lückenlose Verkabelung erforderlich ist.

Der Erfindung liegt die Aufgabe zugrunde, diese Nachteile zu beseitigen und ein Verfahren sowie eine Vorrichtung zur Detektion des Belegt- oder Freizustandes eines Gleisabschnittes anzugeben, die auf einfache Weise auch bei gummibereiften Fahrzeugen eine sichere Gleisfreimeldung ermöglichen.

Verfahrensgemäß wird die Aufgabe dadurch gelöst, dass fahrzeugseitig erzeugte Signale streckenseitig am Anfang und am Ende des Gleisabschnittes empfangen und ausgewertet werden.

Dazu ist gemäß Anspruch 2 eine Vorrichtung vorgesehen, welche fahrzeugseitig Sendemittel und streckenseitig am Anfang und am Ende des Gleisabschnittes Empfangsmittel aufweist, wobei die Empfangsmittel bei Passage des Fahrzeuges Signale der Sendemittel empfangen und mit einer Auswerteeinrichtung verbunden sind.

Auf diese Weise lässt sich ein Gleisfreimeldesystem konzipieren, welches nicht auf das Vorhandensein von metallischen Fahrzeugrädern bzw. Achsen angewiesen ist. Das beanspruchte Gleisfreimeldesystem zeichnet sich durch einfache Bauweise bei universeller Verwendbarkeit, d. h. nicht nur für gummibereifte Fahrzeuge, aus. Umfangreiche streckenseitige Einrichtungen, wie bei Linienleiterschleifen, sind nicht erforderlich. Stattdessen wird eine aktive Gleisfreimeldung erreicht, indem das Fahrzeug permanent oder auch nur im Bereich von erwarteten Gleisabschnittsgrenzen Signale erzeugt, die gleisseitig an diesen Gleisabschnittsgrenzen empfangen und zur Auswertung weitergeleitet werden.

Besonders vorteilhaft ist eine gemäß Anspruch 3 ausgebildete Vorrichtung, wonach die Sendemittel und/oder die Empfangsmittel für signaltechnisch nicht sichere meldetechnische Zwecke bereits vorhandene Komponenten aufweisen. Durch diese Mitbenutzung oder auch Zweckentfremdung ohnehin vorhandener oder vorzusehender Komponenten ergibt sich eine weitere Vereinfachung des Gleisfreimeldesystems.

Gemäß Anspruch 4 ist vorgesehen, dass die Sendemittel Zugbeeinflussungskomponenten und Sendeantennen aufweisen und dass die Empfangsmittel Empfangsantennen und Empfänger aufweisen. Derartige mitbenutzbare Zugbeeinflussungskomponenten können beispielsweise Sendebestandteile der ZUB222 oder der IMU100 der Siemens AG sein. Als streckenseitige Empfänger eignen sich beispielsweise die Meldungsempfänger CPU850 der Siemens AG.

Durch redundante Ausbildung der Sendemittel und der Empfangsmittel gemäß Anspruch 5 ist eine ausreichende Sicherheit der Erzeugung der auszuwertenden Gleisfreimeldesignale auch dann gegeben, wenn die Sendemittel und/oder die Empfangsmittel gemäß Anspruch 3 signaltechnisch nicht sicher ausgebildet sind.

Um den hohen Anforderungen an die Systemsicherheit zu entsprechen, sind die Empfangsmittel gemäß Anspruch 6 mit einer signaltechnisch sicheren Auswerteeinrichtung eines Stellwerkes verbunden. Vorzugsweise erhält das Stellwerk redundante Informationen, die durch die üblicherweise signaltechnisch sichere Auswertung innerhalb des Stellwerkes die erforderliche sehr hohe Sicherheit bei der Gleisfreimeldung erfüllen.

Mit dem Empfang einer korrekten Information wird gemäß Anspruch 7 in der Auswerteeinrichtung des Stellwerkes für eine definierte Zeit eine Relaisausgabe gesetzt. Bei korrekter Funktion erhält damit das den beiden redundanten Empfängern nachgeschaltete Stellwerk bei Einfahrt eines Fahrzeuges in den überwachten Gleisabschnitt eine zweikanalige Besetztmeldung. Durch Verfolgung dieser Meldung entlang der Strecke über die Gleisabschnitte hinweg kann das Stellwerk die entsprechende Gleisfreimeldung für das, insbesondere gummibereifte, Fahrzeug bereitstellen.

Alternativ zur Relaisausgabe kann gemäß Anspruch 8 vorgesehen sein, dass die Auswerteeinrichtung im Stellwerk Mittel zur Dekodierung fahrzeugspezifischer Datentelegramme aufweist. Bei dieser Informationsübertragung mittels Datentelegrammen enthalten diese Telegramme fahrzeugspezifische Kennungen, wodurch zusätzlich eine genauere Fahrzeugortung mit der Gleisfreimeldung verbunden ist.

Die Erfindung wird nachfolgend anhand einer figürlichen Darstellung näher erläutert.

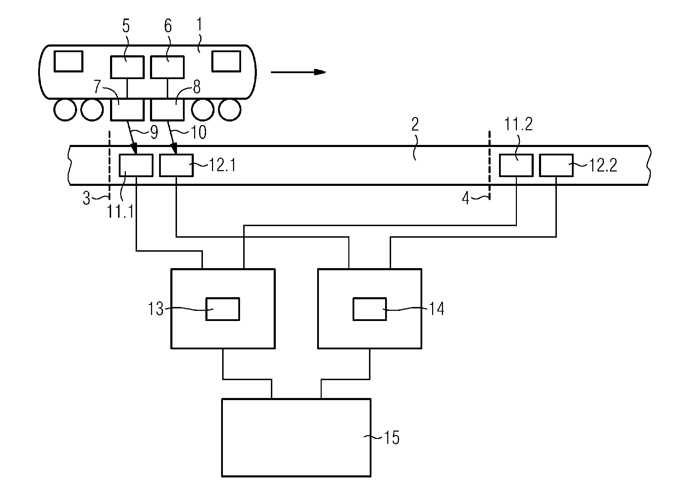

Die Figur zeigt die wichtigsten Komponenten eines erfindungsgemäßen Gleisfreimeldesystems.

Ein gummibereiftes Fahrzeug 1 befährt eine Strecke 2, die in Gleisfreimeldeabschnitte aufgeteilt ist. Dargestellt ist ein vollständiger Gleisfreimeldeabschnitt, der durch einen Anfang 3 und ein Ende 4 gekennzeichnet ist. Das Fahrzeug 1 ist mit zwei unabhängigen, unterschiedlichen, gegebenenfalls auch gleichartigen, Zugbeeinflussungseinrichtungen 5 und 6 ausgestattet, welche über zwei räumlich getrennte Sendeantennen 7 und 8 Telegramme 9 und 10 unterschiedlichen Inhaltes senden. Diese Telegramme 9 und 10 werden streckenseitig von zwei im Fahrbahnraum am Anfang 3 und am Ende 4 des Gleisfreimeldeabschnittes befestigten Empfangsantennen 11.1 und 12.1 bzw. 11.2 und 12.2 empfangen. Die Figur zeigt die Telegrammübertragung am Anfang 3 des Gleisfreimeldeabschnittes. Die dort angeordneten Empfangsantennen 11.1 und 11.2 leiten die Telegramme 9 und 10 an zugeordnete gleichartige Empfänger 13 und 14 weiter. Der Empfänger 13 kann aufgrund des übertragenen Formates nur Telegramme 9 auswerten, während der zweite Empfänger 14 nur Telegramme 10 auswerten kann. Beide Empfänger 13 und 14 sind mit einem Stellwerk 15 verbunden. Mit dem Empfang eines korrekten Telegramms 9 bzw. 10 wird im Stellwerk 15 für eine definierte Zeit eine Relaisausgabe gesetzt. Somit erhält das den beiden Empfängern 13 und 14 nachgeschaltete Stellwerk 15 bei Einfahrt des Fahrzeuges 1 in den zu überwachenden Gleisabschnitt zweikanalig eine Besetztmeldung. Analog wird bei Überfahrt der Empfangsantennen 11.2 und 12.2 am Ende des Gleisabschnittes eine Aufhebung der Besetztmeldung generiert.

## Patentansprüche

1. Verfahren zur Detektion des Belegt- oder Freizustandes eines Gleisabschnittes, insbesondere bei gummibereiften Fahrzeugen (1),
**dadurch gekennzeichnet,**
**dass** fahrzeugseitig erzeugte Signale streckenseitig am Anfang (3) und am Ende (4) des Gleisabschnittes empfangen und ausgewertet werden.

2. Vorrichtung zur Durchführung des Verfahrens nach Anspruch 1,
**dadurch gekennzeichnet,**
**dass** fahrzeugseitig Sendemittel und streckenseitig am Anfang (3) und am Ende (4) des Gleisabschnittes Empfangsmittel vorgesehen sind, wobei die Empfangsmittel bei Passage des Fahrzeuges (1) Signale der Sendemittel empfangen und mit einer Auswerteeinrichtung verbunden sind.

3. Vorrichtung nach Anspruch 2,
**dadurch gekennzeichnet,**
**dass** die Sendemittel und/oder die Empfangsmittel für signaltechnisch nicht sichere meldetechnische Zwecke bereits vorhandene Komponenten aufweisen.

4. Vorrichtung nach Anspruch 2 oder 3,
**dadurch gekennzeichnet,**
**dass** die Sendemittel Zugbeeinflussungskomponenten (5, 6) und Sendeantennen (7, 8) aufweisen und dass die Empfangsmittel Empfangsantennen (11.1, 12.1; 11.2, 12,2) und Empfänger (13, 14) aufweisen.

5. Vorrichtung nach einem der Ansprüche 2 bis 4,
**dadurch gekennzeichnet, dass** die Sendemittel und die Empfangsmittel redundant ausgebildet sind.

6. Vorrichtung nach einem der Ansprüche 2 bis 5,
**dadurch gekennzeichnet,**
**dass** die Empfangsmittel mit einer signaltechnisch sicheren Auswerteeinrichtung eines Stellwerkes (15) verbunden sind.

7. Vorrichtung nach Anspruch 6,
**dadurch gekennzeichnet,**
**dass** die Auswerteeinrichtung eine Relaisausgabe aufweist, die von den Empfangsmitteln beaufschlagt ist.

8. Vorrichtung nach Anspruch 6,
**dadurch gekennzeichnet,**
**dass** die Auswerteeinrichtung Mittel zur Dekodierung fahrzeugspezifischer Datentelegramme (9, 10) aufweist.
